# EUROPEAN PATENT APPLICATION

(11) **EP 4 708 944 A1**
(43) Date of publication of application: **11.03.2026**
(21) Application number: 24835201.5
(22) Date of filing: 12.06.2024
(51) Int. Cl.: H04W 12/08

(54) **COMMUNICATION METHOD, APPARATUS AND SYSTEM**

(30) Priority: 04.07.2023 CN 202310816401
(71) Applicant: Huawei Technologies Co., Ltd., Shenzhen, Guangdong 518129 (CN)
(72) Inventor: ZHU, Fangyuan, Shenzhen, Guangdong 518129 (CN)
(74) Representative: Gill Jennings & Every LLP
(86) International application number: PCT/CN2024/098761
(87) International publication number: WO 2025/007718

(57) **Abstract**

Embodiments of this application provide a communication method, apparatus, and system, and relate to the field of communication technologies, to successfully implement network slice authentication in a network slice replacement scenario. The method includes: A mobility management network element receives a notification message, where the notification message indicates that a first network slice needs to be replaced with a second network slice, and the first network slice is a network slice currently accessed by a UE; and before the UE accesses the second network slice, the mobility management network element sends to-be-authenticated network slice information to the UE, where the to-be-authenticated network slice information includes an identifier of the second network slice, and the to-be-authenticated network slice information is used to trigger performing an authentication procedure on the second network slice.

## Description

This application claims priority to Chinese Patent Application No. 202310816401.3, filed with the China National Intellectual Property Administration on July 4, 2023 and entitled "COMMUNICATION METHOD, APPARATUS, AND SYSTEM", which is incorporated herein by reference in its entirety.

### TECHNICAL FIELD

Embodiments of this application relate to the field of communication technologies, and in particular, to a communication method, apparatus, and system.

### BACKGROUND

In 3GPP R16 (a communication standard protocol), a concept of network slice-specific authentication and authorization (network slice-specific authentication and authorization, NSSAA) is introduced. Before accessing a network slice in a communication network, a user equipment (user equipment, UE) needs to determine whether an NSSAA procedure needs to be performed on the network slice.

If the UE has a capability of supporting the NSSAA procedure, and the NSSAA needs to be performed on at least one network slice in network slices included in a registration request sent by the UE to an access and mobility management function (access and mobility management function, AMF) network element, the AMF triggers the NSSAA procedure.

When some network slices in the communication network have insufficient resources or cannot continue to be used, network slice replacement (that is, network slice replacement) may be performed to replace an old network slice with a new network slice, to implement service continuity by using resources of the new network slice. However, in a network slice replacement process, if the NSSAA procedure needs to be performed on the new network slice, how to perform the NSSAA procedure on the new network slice needs to be resolved.

### SUMMARY

Embodiments of this application provide a communication method, apparatus, and system, to successfully implement network slice authentication in a network slice replacement scenario.

To achieve the foregoing objectives, the following technical solutions are used in embodiments of this application.

According to a first aspect, an embodiment of this application provides a communication method, including: A mobility management network element receives a notification message, where the notification message indicates that a first network slice needs to be replaced with a second network slice, and the first network slice is a network slice currently accessed by UE; and before the UE accesses the second network slice, the mobility management network element sends to-be-authenticated network slice information to the UE, where the to-be-authenticated network slice information includes an identifier of the second network slice, and the to-be-authenticated network slice information is used to trigger performing an authentication procedure on the second network slice.

According to the communication method provided in this embodiment of this application, network slice authentication can be successfully implemented in a network slice replacement scenario, to avoid a security risk caused by arbitrary access of the UE to the second network slice because the second network slice is not authenticated.

In a possible implementation, that the mobility management network element sends the to-be-authenticated network slice information to the UE includes: The mobility management network element sends a first configuration update control message to the UE, where the first configuration update control message includes the to-be-authenticated network slice information. In this solution, the mobility management network element may send the configuration update control message to the UE by using a UCU procedure, to indicate the UE to perform the authentication procedure on the second network slice. In this way, when the first network slice is congested or unavailable, the first network slice needs to be replaced with the second network slice, and network slice authentication can be successfully implemented in a scenario in which the UE has not initiated a PDU session establishment request, to avoid a security risk caused by arbitrary access of the UE to the second network slice because the second network slice is not authenticated.

In a possible implementation, that the mobility management network element sends the to-be-authenticated network slice information to the UE includes: The mobility management network element sends a registration accept message to the UE, where the registration accept message includes the to-be-authenticated network slice information. In this solution, the mobility management network element may send the configuration update control message to the UE by using a UCU procedure, to trigger the UE to initiate a re-registration procedure, and then an AMF initiates an authentication procedure on the second network slice. In this way, when the first network slice is congested or unavailable, the first network slice needs to be replaced with the second network slice, and network slice authentication can be successfully implemented in a scenario in which the UE has not initiated a PDU session establishment request, to avoid a security risk caused by arbitrary access of the UE to the second network slice because the second network slice is not authenticated.

In a possible implementation, before the mobility management network element sends the registration accept message to the UE, the communication method provided in this embodiment of this application further includes: The mobility management network element sends a second configuration update control message to the UE, where the second configuration update control message is used to trigger the UE to initiate a registration procedure; and the mobility management network element receives a registration request message from the UE. The second configuration update control message is used to trigger the UE to initiate the registration procedure, so that the AMF can further initiate the authentication procedure on the second network slice.

In a possible implementation, the communication method provided in this embodiment of this application includes: The mobility management network element initiates an authentication procedure on the second network slice, determines that authentication on the second network slice succeeds, and sends a third configuration update control message to the UE, where the third configuration update control message includes information about a network slice allowed to be accessed, and the information about the network slice allowed to be accessed includes the identifier of the second network slice.

In a possible implementation, the third configuration update control message further includes a mapping relationship between the first network slice and the second network slice, and the AMF interacts with the UE based on the mapping relationship between the first network slice and the second network slice, so that the UE accesses the second network slice, to implement network slice replacement.

In a possible implementation, before the mobility management network element receives the notification message, the communication method provided in this embodiment of this application further includes: The mobility management network element receives a first session establishment request from the UE, where the first session establishment request includes an identifier of the first network slice, and the first session establishment request is used to trigger establishment of a protocol data unit PDU session associated with the first network slice.

Further, after the second network slice is successfully authenticated, the communication method provided in this embodiment of this application further includes: If the PDU session associated with the first network slice is not established, the mobility management network element sends a second session establishment request to the session management network element, where the second session establishment request includes the identifier of the second network slice, and the second session establishment request is used to trigger establishment of a PDU session associated with the second network slice.

In this embodiment of this application, after the mobility management network element successfully authenticates the second network slice, the mobility management network element may change the establishment that is of the PDU session associated with the first network slice and that is previously initiated by the UE to the establishment of the PDU session associated with the second network slice, to avoid a security risk caused by arbitrary access of the UE to the second network slice because the second network slice is not authenticated, and successfully establish the PDU session for the UE.

In a possible implementation, the communication method provided in this embodiment of this application further includes: When the UE has established the protocol data unit PDU session associated with the first network slice, the mobility management network element triggers a session modification procedure for transferring the PDU session from the first network slice to the second network slice. After the first network slice is replaced with the second network slice, the PDU session originally associated with the first network slice is transferred to the second network slice, so that it can be ensured that service continuity is not affected.

In a possible implementation, before the mobility management network element sends the to-be-authenticated network slice information to the UE, the communication method provided in this embodiment of this application further includes: The mobility management network element determines, based on subscription data of the UE, whether the authentication procedure needs to be performed on the second network slice.

According to a second aspect, an embodiment of this application provides a communication method, including: A mobility management network element receives a session establishment request from UE, where the session request includes an identifier of a first network slice, and the session establishment request is used to trigger establishment of a PDU session associated with the first network slice; then the mobility management network element receives a notification message, where the notification message indicates that the first network slice needs to be replaced with a second network slice; and when the mobility management network element determines that an authentication procedure needs to be performed on the second network slice, the mobility management network element sends indication information to the UE, where the indication information indicates that the establishment of the PDU session associated with the first network slice is rejected.

In the communication method provided in this embodiment of this application, when determining that the second network slice needs to be replaced with the first network slice, the mobility management network element needs to consider whether to authenticate the second network slice. When the second network slice needs to be authenticated, an AMF rejects to establish the PDU session associated with the first network slice, to avoid a security risk caused by arbitrary access of the UE to the second network slice because the second network slice is not authenticated.

In a possible implementation, before the mobility management network element sends the indication information to the UE, the communication method provided in this embodiment of this application further includes: The mobility management network element determines that the UE has not performed the authentication procedure on the second network slice; or the mobility management network element does not store an authentication result of performing the authentication procedure on the second network slice by the UE.

In a possible implementation, before the mobility management network element sends the indication information to the UE, the communication method provided in this embodiment of this application further includes: The mobility management network element determines, based on subscription data of the UE, whether the authentication procedure needs to be performed on the second network slice.

According to a third aspect, an embodiment of this application provides a communication apparatus, including a receiving module and a sending module. The receiving module is configured to receive a notification message, where the notification message indicates that a first network slice needs to be replaced with a second network slice, and the first network slice is a network slice currently accessed by user equipment UE; and the sending module is configured to: before the UE accesses the second network slice, send to-be-authenticated network slice information to the UE, where the to-be-authenticated network slice information includes an identifier of the second network slice, and the to-be-authenticated network slice information is used to trigger performing an authentication procedure on the second network slice.

In a possible implementation, the sending module is specifically configured to send a first configuration update control message to the UE, where the first configuration update control message includes the to-be-authenticated network slice information.

In a possible implementation, the sending module is specifically configured to send a registration accept message to the UE, where the registration accept message includes the to-be-authenticated network slice information.

In a possible implementation, the sending module is further configured to send a second configuration update control message to the UE, where the second configuration update control message is used to trigger the UE to initiate a registration procedure; and the receiving module is further configured to receive a registration request message from the UE.

In a possible implementation, the communication apparatus provided in this embodiment of this application further includes a processing module and a determining module. The processing module is configured to initiate the authentication procedure on the second network slice. The determining module is configured to determine that authentication on the second network slice succeeds. The sending module is further configured to send a third configuration update control message to the UE, where the third configuration update control message includes information about a network slice allowed to be accessed, and the information about the network slice allowed to be accessed includes the identifier of the second network slice.

In a possible implementation, the third configuration update control message further includes a mapping relationship between the first network slice and the second network slice.

In a possible implementation, the receiving module is further configured to receive a first session establishment request from the UE, where the first session establishment request includes an identifier of the first network slice, and the first session establishment request is used to trigger establishment of a PDU session associated with the first network slice; and the sending module is further configured to: if the PDU session associated with the first network slice is not established, send a second session establishment request to a session management network element, where the second session establishment request includes the identifier of the second network slice, and the second session establishment request is used to trigger establishment of a PDU session associated with the second network slice.

In a possible implementation, the processing module is further configured to: when the UE has established a PDU session associated with the first network slice, trigger a session modification procedure for transferring the PDU session from the first network slice to the second network slice.

In a possible implementation, the determining module is further configured to determine, based on subscription data of the UE, whether the authentication procedure needs to be performed on the second network slice.

According to a fourth aspect, an embodiment of this application provides a communication apparatus, including a receiving module and a sending module. The receiving module is configured to receive a session establishment request from UE, where the session request includes an identifier of a first network slice, and the session establishment request is used to trigger establishment of a PDU session associated with the first network slice; the receiving module is further configured to receive a notification message, where the notification message indicates that the first network slice needs to be replaced with a second network slice; and the sending module is configured to: when the mobility management network element determines that an authentication procedure needs to be performed on the second network slice, send indication information to the UE, where the indication information indicates that the establishment of the PDU session associated with the first network slice is rejected.

In a possible implementation, the communication apparatus provided in this embodiment of this application further includes a determining module. The determining module is configured to determine that the UE has not performed the authentication procedure on the second network slice; or the determining module is configured to determine that an authentication result of performing the authentication procedure on the second network slice by the UE is not stored.

In a possible implementation, the determining module is further configured to determine, based on subscription data of the UE, whether the authentication procedure needs to be performed on the second network slice.

According to a fifth aspect, an embodiment of this application provides a communication apparatus, including a memory and at least one processor connected to the memory. The memory is configured to store computer program code, the computer program code includes computer instructions, and when the computer instructions are executed by the at least one processor, the communication apparatus is caused to perform the communication method in any one of the first aspect, the second aspect, and the possible implementations of the first aspect and the second aspect.

According to a sixth aspect, an embodiment of this application provides a computer-readable storage medium, where the computer-readable storage medium stores computer instructions, and when the computer instructions are run on a computer, the communication method in any one of the first aspect, the second aspect, and the possible implementations of the first aspect and the second aspect is performed.

According to a seventh aspect, an embodiment of this application provides a computer program product. The computer program product includes computer instructions, and when the computer instructions are run on a computer, the communication method in any one of the first aspect, the second aspect, and the possible implementations of the first aspect and the second aspect is performed.

According to an eighth aspect, an embodiment of this application provides a chip system, including a processor, configured to invoke a computer program from a memory and run the computer program, to cause a terminal device on which the chip system is installed performs the communication method in any one of the first aspect, the second aspect, and the possible implementations of the first aspect and the second aspect.

According to a ninth aspect, an embodiment of this application provides a communication system, including a mobility management network element and UE. The mobility management network element is configured to perform the communication method in any one of the first aspect, the second aspect, and the possible implementations of the first aspect and the second aspect.

It should be understood that, for beneficial effect achieved by the technical solutions of the third aspect to the ninth aspect and corresponding possible implementations of the technical solutions of the third aspect to the ninth aspect of this application, refer to the technical effect of the first aspect and the second aspect and the corresponding possible implementations of the first aspect and the second aspect. Details are not described herein again.

### BRIEF DESCRIPTION OF DRAWINGS

FIG. 1 is a first diagram of a 5G communication network architecture according to an embodiment of this application;
FIG. 2 is a second diagram of a 5G communication network architecture according to an embodiment of this application;
FIG. 3 is a diagram of a network slice authentication procedure according to an embodiment of this application;
FIG. 4 is a first diagram of a communication method according to an embodiment of this application;
FIG. 5 is a second diagram of a communication method according to an embodiment of this application;
FIG. 6 is a third diagram of a communication method according to an embodiment of this application;
FIG. 7 is a fourth diagram of a communication method according to an embodiment of this application;
FIG. 8 is a fifth diagram of a communication method according to an embodiment of this application;
FIG. 9 is a sixth diagram of a communication method according to an embodiment of this application;
FIG. 10 is a first diagram of a structure of a communication apparatus according to an embodiment of this application; and
FIG. 11 is a second diagram of a structure of a communication apparatus according to an embodiment of this application.

### DESCRIPTION OF EMBODIMENTS

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects but do not indicate a particular order of the objects. For example, the first network slice, the second network slice, and the like are used to distinguish between different network slices, but are not used to describe a specific order of the network slices.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner.

In descriptions of embodiments of this application, unless otherwise specified, "a plurality of" means two or more than two. For example, a plurality of network slices are two or more network slices.

A communication method provided in embodiments of this application may be applied to a 4th generation mobile communication technology (4th Generation mobile communication technology, 4G) network architecture, for example, a long term evolution (long term evolution, LTE) system, or may be applied to a 5th generation mobile communication technology (5th Generation mobile communication technology, 5G) network architecture, for example, an NR system, or may be applied to a future 6th generation mobile communication technology network architecture, or another similar communication system. This is not specifically limited in embodiments of this application.

The following describes, by using a 5G network architecture as an example, a communication network architecture to which this application is applied.

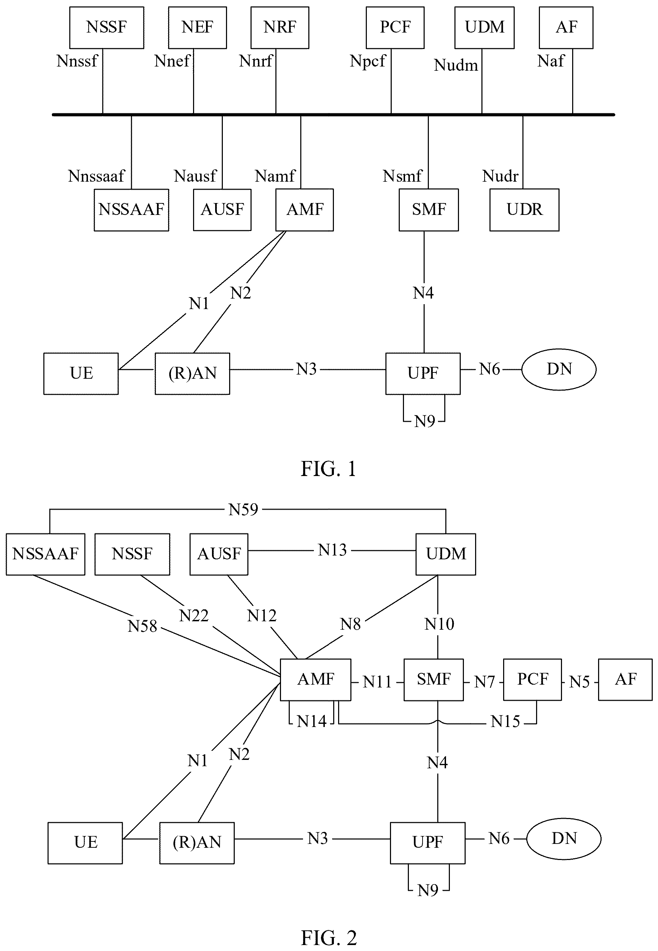

FIG. 1 is a diagram of a 5G communication network architecture based on a service-oriented architecture. The 5G communication network architecture shown in FIG. 1 includes three parts: a UE, a data network (data network, DN), and an operator network.

The operator network may include one or more of the following network elements: an access network (access network, AN) or a radio access network (radio access network, RAN), a user plane function (user plane function, UPF), a network slice-specific authentication and authorization function (network slice-specific authentication and authorization function, NSSAAF), an authentication service function (authentication server function, AUSF), an access management function (access management function, AMF), a session management function (session management function, SMF), a unified data repository (unified data repository, UDR) function, a network slice selection function (network slice selection function, NSSF), a network exposure function (network exposure function, NEF), a network repository function (NF repository function, NRF), a policy control function (policy control function, PCF), and a unified data management (unified data management, UDM), and an application function (application function, AF).

In the operator network, a part other than a radio access network part may be referred to as a core network part. In addition, for ease of description, in embodiments of this application, an AMF network element may be referred to as an AMF for short, and a UDM network element may be referred to as a UDM for short. This is similar for other network elements, and is not enumerated one by one.

The following briefly describes main functions of the network elements in FIG. 1.

The (R)AN may be an or a RAN. Specifically, the (R)AN may be a base station in various forms, for example, a macro base station, a micro base station, and a distributed unit-control unit (distributed unit- control unit, DU-CU). In addition, the base station may alternatively be a radio controller in a cloud radio access network (cloud radio access network, CRAN) scenario, a relay station, an access point, a vehicle-mounted device, a wearable device, a network device in a future evolved public land mobile network (public land mobile network, PLMN), or the like. The (R)AN is mainly responsible for radio resource management, service quality management, data compression and encryption, and the like on an air interface side.

The UPF supports all or some of the following functions: interconnection between a PDU session and a data network; packet routing and forwarding, for example, supporting forwarding of traffic to the data network after performing uplink classifier (uplink classifier) on the traffic, supporting a branching point (branching point) to support multi-homed (multi-homed) PDU sessions; and data packet detection.

The NSSAAF is responsible for supporting authentication and authorization on a network slice.

The AUSF is responsible for user authentication and authorization, including receiving a request from an AMF for UE identity authentication, requesting a key from a UDM, and forwarding, to the AMF for authentication, the key delivered by the UDM.

The AMF is responsible for mobility management of a user, including mobility state management, temporary user identity allocation, and user authentication and authorization.

The SMF is responsible for UPF network element selection, UPF network element reselection, internet protocol (Internet Protocol, IP) address allocation, bearer establishment, modification, and release, and QoS control.

The UDR stores and retrieves subscription data, policy data, and common architecture data for a UDM, a PCF, and an NEF to obtain related data. The UDR can provide different data access authentication mechanisms for different types of data (for example, the subscription data and the policy data), to ensure data access security. The UDR needs to return a failure response with an appropriate cause value for an invalid service operation or data access request.

The NSSF is configured to select a group of network slices for a UE, and determine network slice selection assistance information (single network slice selection assistance information, NSSAI), for example, determine single network slice selection assistance information (single network slice selection assistance information, S-NSSAI).

The NEF mainly supports a network capability exposure function, and exposes a network capability and a service to the outside. A 3rd generation partnership project (3rd generation partnership project, 3GPP) network function (network function, NF) releases a function and an event to another network function via the NEF. The capability and the event opened by the network function can be securely opened to a third-party application.

The NRF is configured to discover services, and maintain network function text of available network function examples and services supported by these network functions.

The PCF is mainly configured to manage a policy rule, manage user subscription information, and the like.

The UDM is responsible for managing subscription data, and notifying a corresponding network element when the subscription data is modified.

The AF provides a specific application-layer service for a UE. When providing the service for the UE, the AF has a requirement on quality of service (QoS) and a charging policy and needs to notify the network. In addition, the AF also needs application-related information fed back by a core network.

In the operator network in FIG. 1, in addition to the (R)AN and the UPF, any two of other network elements may communicate with each other through a service-oriented interface. It may be understood that each network element corresponds to a service-oriented interface. For example, a service-oriented interface of the NSSAAF is Nnssaaf, a service-oriented interface of the AUSF is Nausf, a service-oriented interface of the AMF is Namf, a service-oriented interface of the SMF is Nsmf, a service-oriented interface of the UDR is Nudr, a service-oriented interface of the NSSF is Nnssf, a service-oriented interface of the NEF is Nnef, a service-oriented interface of the NRF is Nnrf, a service-oriented interface of the PCF is Npcf, a service-oriented interface of the UDM is Nudm, and a service-oriented interface of the AF is Naf. For example, interfaces used for communication between the NEF and the AUSF are Nnef and Nausf. This is similar for interfaces between other network elements, and is not enumerated one by one.

In addition, in FIG. 1, the AMF may communicate with the UE through an N1 interface, the AMF may communicate with the (R)AN through an N2 interface, the RAN may communicate with the UPF through an N3 interface, the SMF may communicate with the UPF through an N4 interface, the UE communicates with the RAN through an air interface, and the UPF may communicate with the DN through an N6 interface.

The UE in FIG. 1 may be a netbook, a tablet computer, a smartwatch, or the like. Alternatively, the UE may be another desktop device, a laptop device, a handheld device, a wearable device, a smart home device, a vehicle-mounted device or the like that has a radio communication function, for example, an ultra-mobile personal computer (ultra-mobile personal computer, UMPC), a smart camera, a netbook, a personal digital assistant (personal digital assistant, PDA), a portable multimedia player (portable multimedia player, PMP), an AR (augmented reality)/a VR (virtual reality) device, a flight vehicle, or a robot. A specific type, a structure, and the like of the UE are not limited in this embodiment of this application.

The data network DN in FIG. 1 may be an operator service network, an internet access network, a third-party service network, or the like. The DN may exchange information with the UE by using a PDU session. PDU sessions may be classified into a plurality of types, for example, internet protocol version 4 (internet protocol version 4, IPv4) and IPv6.

FIG. 2 is a diagram of a point-to-point-based 5G communication network architecture. The communication network architecture shown in FIG. 2 is similar to the network architecture shown in FIG. 1. For function descriptions of network elements in FIG. 2, refer to function descriptions of corresponding network elements in FIG. 1. Details are not described herein again. A main difference between FIG. 1 and FIG. 2 lies in that interfaces between the network elements in FIG. 2 are point-to-point interfaces, and interfaces between the network elements in FIG. 1 are service-oriented interfaces.

Optionally, the communication network architectures in FIG. 1 and FIG. 2 may include more network elements or fewer network elements, and names of the network elements may alternatively be other names. This is not limited in embodiments of this application. It should be noted that the mobility management network element in this embodiment of this application may be an AMF in a 5G communication network architecture. In the following embodiments, an example in which the mobility management network element is the AMF is used for description.

The following explains and describes some technical terms and background knowledge that are related to a communication method, apparatus, and system provided in embodiments of this application.

### 1. Network slice

In a 5G network, mutually isolated network environments are provided for different application scenarios in a manner of virtualizing independent logical networks on a same network infrastructure, so that network functions and characteristics of the different application scenarios can be customized based on respective requirements, and quality of service (quality of service, QoS) requirements of different services can be effectively ensured. The network slice is an end- to-end logical network. Each network slice includes a group of network functions (or referred to as network elements), resources for running these network functions, and specific configurations of these network functions. Each network slice includes a respective service function (for example, an AMF, a user plane function (user plane function, UPF), a session management function SMF, and a policy control function PCF). In the 5G network, different types of network slices may be selected for a UE based on service requirements of the UE.

For example, based on different application scenarios, the network slice may include different types of network slices applied to a mobile broadband (mobile broadband, MBB) scenario, an internet of things scenario, and the like, for example, an MBB network slice, a critical machine type communication (critical machine type communication, critical MTC) network slice, and a massive machine type communication (massive machine type communication, massive MTC) network slice.

### 2. Network slice-specific authentication and authorization (NSSAA)

When a UE is initially attached to a network, a network slice selection process is triggered. To be specific, a proper type of network slice is selected for the UE based on a service requirement of the UE. Then, the UE may access the network slice to perform a related service. In 3GPP R16 (a communication standard protocol), a network slice-specific authentication and authorization (that is, NSSAA) procedure is introduced. Specifically, before accessing a requested network slice, the UE needs to determine whether the network slice requested to be accessed by the UE needs to be authenticated. If the network slice needs to be authenticated, the UE first interacts with a core network to complete authentication on the requested network slice. After the authentication succeeds, the UE can access the network slice. If the network slice does not need to be authenticated, the UE has not performed an authentication procedure, and the UE can directly access the network slice.

It should be understood that the UE may request one or more network slices. An NSSAA procedure needs to be performed on some network slices (for example, a network slice with a high security requirement), and the NSSAA procedure does not need to be performed on some network slices (for example, a network slice with no security requirement). Subscription data of the UE stores an identifier of a subscribed network slice, and the subscription data further includes indication information that indicates whether the NSSAA procedure needs to be performed on the network slice.

Currently, in the standard protocol, before accessing the network slice, the UE first determines whether the NSSAA procedure needs to be performed on the requested network slice. For a network slice on which the NSSAA procedure needs to be performed, a mobility management network element invokes a network slice-specific authentication procedure that is based on an extensible authentication protocol (extensible authentication protocol, EAP) to perform the NSSAA procedure. After the authentication ends, the UE may access a network slice that is successfully authenticated. For a network slice on which the NSSAA procedure does not need to be performed, the UE may directly access the network slice.

In this embodiment of this application, each network slice corresponds to unique network slice selection assistance information (NSSAI). In this embodiment of this application, an example in which the NSSAI is single network slice selection assistance information (S-NSSAI) is used for description. It may be understood that the S-NSSAI is unique. Therefore, the S-NSSAI may identify a network slice, that is, the S-NSSAI may be used as an identifier of the network slice. In the following embodiments, a network slice may also be referred to as a piece of S-NSSAI.

Correspondingly, an NSSAA procedure on the network slice identified by the S-NSSAI may be simply referred to as a network slice authentication procedure, or referred to as an S-NSSAI authentication procedure for short. Similarly, a result of the NSSAA procedure on the network slice identified by the S-NSSAI may be referred to as an authentication result of the network slice identified by the S-NSSAI or an authentication result of the S-NSSAI for short.

### 3. Network slice replacement (network slice replacement)

When a network slice (S-NSSAI) has insufficient resources (for example, congestion occurs) or cannot continue to be used, network slice replacement may be performed, to replace a network slice currently accessed by the UE with another network slice (which may be referred to as an alternative network slice), to implement service continuity by using resources of the alternative network slice. Therefore, a concept of the network slice replacement is introduced. Specifically, some network elements (for example, a PCF, an NSSF, or a network element in a network management system, for example, an operations, administration, and maintenance (operations, administration, and maintenance, OAM) network element in a management network) in a network may determine that some S-NSSAI in the network is unavailable or congested, and notify a corresponding AMF network element. The AMF network element triggers a network slice replacement procedure.

For ease of description, a replaced network slice (that is, a congested or unavailable network slice) may be referred to as old S-NSSAI for short, and the alternative network slice is referred to as alternative S-NSSAI.

Optionally, the PCF, the NSSF, or the OAM network element may determine, based on some performance indicators, that the network slice is congested or unavailable. The performance indicators include but are not limited to one or more of the following: a network slice resource, a packet loss rate, a latency, a rate, a network slice life cycle, and the like. For example, when the network slice has insufficient resources, the packet loss rate exceeds a threshold, the latency is high, or the rate is excessively low, it may be determined that the network slice is congested; and when the network slice life cycle expires, it may be determined that the network slice is unavailable.

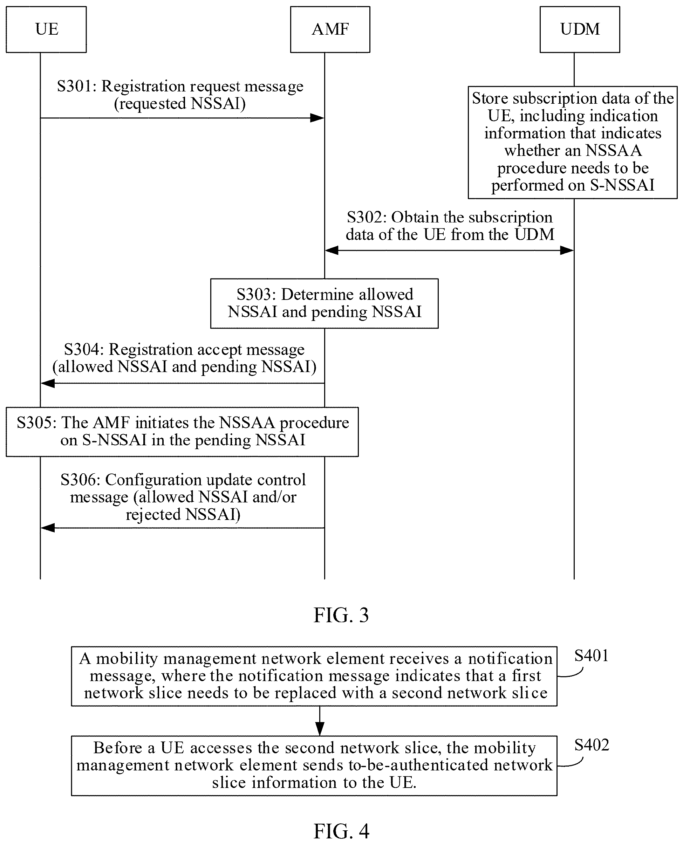

The following describes an existing network slice authentication procedure with reference to FIG. 3. As shown in FIG. 3, the network slice authentication procedure includes S301 to S306.

S301: A UE sends a registration request (Registration Request) message to an AMF. Correspondingly, the AMF receives the registration request message.

The registration request message carries an identifier of a network slice requested by the UE (for example, carries requested NSSAI). The network slice requested by the UE includes one or more network slices. In other words, the requested NSSAI includes one or more pieces of S-NSSAI.

Optionally, the registration request message may further carry indication information that indicates whether the UE has a capability of supporting an NSSAA procedure, that is, indication information that indicates whether the UE supports an NSSAA characteristic.

S302: The AMF obtains subscription data of the UE from a UDM. Specifically, the AMF sends, to the UDM, a request for obtaining the subscription data of the UE, and the UDM returns the subscription data of the UE to the AMF.

In this embodiment of this application, the subscription data of the UE includes S-NSSAI (of a network slice) to which the UE subscribes. If the NSSAA procedure needs to be performed on one or more pieces of S-NSSAI in the S-NSSAI to which the UE subscribes, subscription information further includes indication information (for example, an NSSAA indication) that indicates whether the NSSAA procedure needs to be performed on the S-NSSAI.

For example, "0" may indicate that the NSSAA procedure does not need to be performed, and "1" may indicate that the NSSAAprocedure needs to be performed. It is assumed that the S-NSSAI to which the UE subscribes includes S-NSSAI #1 and S-NSSAI #2. Indication information corresponding to the S-NSSAI #1 is 1, and in this case, the NSSAA procedure needs to be performed on the S-NSSAI #1; and indication information corresponding to the S-NSSAI #2 is 0, and in this case, the NSSAA procedure does not need to be performed on the S-NSSAI #2.

It may be understood that, after the AMF receives the registration request message, the AMF first performs a primary authentication procedure on a permanent identifier of the UE. The primary authentication procedure on the permanent identifier of the UE may also be referred to as the security procedures PLMN access (security procedures PLMN access) of the UE. After the primary authentication procedure succeeds, the AMF obtains the subscription data of the UE from the UDM.

S303: The AMF determines, based on the subscription data of the UE, current location information of the UE, and the identifier of the network slice requested by the UE, an S-NSSAI set on which the NSSAA procedure dos not need to be performed (that is, an S-NSSAI set that is allowed to be accessed without authentication, which is referred to as allowed NSSAI below) and an S-NSSAI set on which the NSSAA procedure needs to be performed (that is, an S-NSSAI set that is to be authenticated, which is referred to as pending NSSAI below).

The location information of the UE is used to determine whether the UE is located in coverage of the network slice. If the UE is located in the coverage of the network slice, the UE is allowed to access the network slice. If the UE is located outside the coverage of the network slice, the UE is not allowed to access the network slice. For example, in one or more network slices requested by the UE, the UE may be located in coverage of a part of the network slices, and may be located outside coverage of the other part of the network slices.

The subscription data of the UE is used to determine specific S-NSSAI on which the NSSAA procedure needs to be performed and specific S-NSSAI on which the NSSAA procedure does not need to be performed in the S-NSSAI requested by the UE (that is, the requested NSSAI).

It should be noted that, in this embodiment of this application, the allowed NSSAI includes S-NSSAI that covers a location of the UE that is determined based on the location information of the UE and the S-NSSAI on which the NSSAA procedure does not need to be performed and that is determined based on the subscription data. To be specific, the AMF adds, to the allowed NSSAI, S-NSSAI that is in the requested NSSAI and that covers the location of the UE and the S-NSSAI on which the NSSAA does not need to be performed and that is indicated by indication information in the subscription data. The pending NSSAI includes S-NSSAI that covers a location of the UE that is determined based on the location information of the UE and the S-NSSAI on which the NSSAA procedure needs to be performed and that is determined based on the subscription data. To be specific, the AMF adds, to the pending NSSAI, S-NSSAI that is in the requested NSSAI and that covers the location of the UE and the S-NSSAI on which the NSSAA needs to be performed and that is indicated by indication information in the subscription data.

For example, it is assumed that the UE is located in the coverage of the network slice requested by the UE, and the requested NSSAI carried in the registration request message includes S-NSSAI #1, S-NSSAI #2, and S-NSSAI #3, and it is determined, based on indication information corresponding to each piece of S-NSSAI in the subscription data of the UE, that the NSSAA procedure needs to be performed on the S-NSSAI #1, the NSSAA procedure does not need to be performed on the S-NSSAI #2, and the NSSAA procedure needs to be performed on the S-NSSAI #3. In this case, the S-NSSAI #1 and the S-NSSAI #3 are added to the pending NSSAI, and the S-NSSAI #2 is added to the allowed NSSAI.

Subsequently, for the S-NSSAI in the pending NSSAI, the AMF triggers the NSSAA procedure on the S-NSSAI, that is, the NSSAA procedure needs to be performed. After the S-NSSAI is successfully authenticated, the UE is allowed to access the S-NSSAI. For the S-NSSAI in the allowed NSSAI, the AMF does not trigger the NSSAA procedure on the S-NSSAI, that is, the NSSAA procedure does not need to be performed. In other words, the UE is allowed to directly access the S-NSSAI.

S304: The AMF sends a registration accept (Registration Accept) message to the UE, where the registration accept message carries the allowed NSSAI and the pending NSSAI. Correspondingly, the UE receives the registration accept message.

In this embodiment of this application, after the UE receives the pending NSSAI and the allowed NSSAI, the UE may learn of a specific network slice on which the NSSAA procedure needs to be performed and a specific network slice on which the NSSAA procedure does not need to be performed.

S305: The AMF initiates the NSSAA procedure on the S-NSSAI in the pending NSSAI.

For example, if the pending NSSAI includes the S-NSSAI #1 and the S-NSSAI #3, the AMF triggers the NSSAA procedure on the S-NSSAI #1, and also triggers the NSSAA procedure on the S-NSSAI #3.

The NSSAA procedure is implemented through interaction between the UE and the AMF. For a specific implementation process of the NSSAA procedure, refer to descriptions in existing technical documentation. Details are not described in this embodiment of this application.

S306: The AMF sends a configuration update control (UE configuration update command) message to the UE, where the configuration update control message includes new allowed NSSAI and/or rejected NSSAI.

In this embodiment of this application, for each piece of S-NSSAI in the pending NSSAI, if an authentication result of performing the NSSAA procedure on the S-NSSAI is a success, the AMF adds the S-NSSAI to the allowed NSSAI. In other words, the allowed NSSAI is updated based on the authentication result. If the authentication result of performing the NSSAA procedure on the S-NSSAI is a failure, the AMF adds the S-NSSAI to a rejected S-NSSAI set (which is referred to as the rejected NSSAI below).

For example, the requested NSSAI included in the UE includes the S-NSSAI #1 and the S-NSSAI #2. The NSSAA procedure does not need to be performed on the S-NSSAI #1, and the NSSAA procedure needs to be performed on the S-NSSAI #2. In this case, in the registration accept message, the allowed NSSAI includes the S-NSSAI #1, and the pending NSSAI includes the S-NSSAI #2. Then, the AMF triggers the NSSAA procedure on the S-NSSAI #2. If an authentication result of the procedure is a success, the AMF adds the S-NSSAI #2 to the allowed NSSAI, in other words, the allowed NSSAI is updated, and an updated allowed NSSAI includes the S-NSSAI #1 and the S-NSSAI #2. If the authentication result of the procedure is a failure, the AMF adds the S-NSSAI #2 to the rejected NSSAI, in other words, the rejected NSSAI includes the S-NSSAI #2.

In this embodiment of this application, the AMF sends the configuration update control message to the UE by using a UE configuration update procedure (UE configuration update procedure, which is referred to as a UCU procedure for short), to send the new allowed NSSAI (that is, new Allowed NSSAI) and/or the rejected NSSAI to the UE.

Based on the foregoing content, an embodiment of this application provides a communication method. The communication method may be applied to the communication network architectures shown in FIG. 1 and FIG. 2. An application scenario of the communication method is: whether to perform an NSSAA procedure on a new network slice in a process of network slice replacement (that is, network slice replacement) when some network slices in a communication network are congested or unavailable, and how to perform the NSSAA procedure on the new network slice.

As shown in FIG. 4, the communication method provided in this embodiment of this application includes the following steps.

S401: A mobility management network element receives a notification message, where the notification message indicates that a first network slice needs to be replaced with a second network slice.

The first network slice is a network slice currently accessed by UE, and the notification message further carries an identifier of the first network slice and an identifier of the second network slice. For example, the identifier of the first network slice is denoted as first S-NSSAI, and the identifier of the second network slice is denoted as second S-NSSAI.

In this embodiment of this application, the mobility management network element receives the notification message from another network element (for example, a PCF, an NSSF, or an OAM). It should be understood that a PCF, an NSSF, or an OAM network element in a network may monitor a status of a network slice. When detecting that a network slice or some network slices in the network are congested or unavailable, the PCF, the NSSF, or the OAM determines that network slice replacement needs to be performed (the network slice that needs to be replaced is referred to as the first network slice below), and the PCF, the NSSF, or the OAM may select, from the network slices in the network, a network slice that is not congested or is available (which is referred to as the second network slice below), send the notification message to the mobility management network element supporting the first network slice, to notify the mobility management network element that the congested or unavailable first network slice needs to be replaced with the second network slice.

For example, the PCF, the NSSF, or the OAM detects that the first network slice (that is, old S-NSSAI) is unavailable, and determines to replace the first network slice with the second network slice (alternative S-NSSAI). Therefore, the PCF, the NSSF, or the OAM sends, to the AMF, the notification message that carries the identifier of the first network slice and the identifier of the second network slice, to notify the mobility management network element that the first network slice needs to be replaced with the second network slice. After receiving the notification message, the mobility management network element may learn that the first network slice is congested or unavailable, and learn that the first network slice needs to be replaced with the second network slice.

Optionally, there may be one or more second network slices that can replace the first network slice. This is not limited in this embodiment of this application.

S402: Before the UE accesses the second network slice, the mobility management network element sends to-be-authenticated network slice information to the UE.

The to-be-authenticated network slice information includes the identifier of the second network slice, and the to-be-authenticated network slice information is used to trigger performing an authentication procedure performed on the second network slice. It should be understood that performing an authentication procedure on a network slice in embodiments of this application refers to performing an NSSAA procedure on the network slice.

In this embodiment of this application, in an implementation, the to-be-authenticated network slice information may be represented by pending NSSAI, and the pending NSSAI includes the identifier of the second network slice.

After the mobility management network element receives the notification message in step S401, the mobility management network element determines that the first network slice is the network slice currently accessed by the UE, and determines, based on the notification message, that the UE needs to access the second network slice. Before the UE accesses the second network slice, the mobility management network element determines, based on subscription data obtained from a unified data management (UDM) function, that the second network slice is a network slice on which the NSSAA procedure needs to be performed in network slices to which the UE subscribes. In this way, the mobility management network element initiates the authentication procedure on the second network slice.

Optionally, a method in which the mobility management network element determines that the first network slice is the network slice currently accessed by the UE may be as follows: The mobility management network element determines, based on a context of the UE, that allowed NSSAI of the UE includes the identifier of the first network slice. In this case, it indicates that the first network slice is the network slice currently accessed by the UE.

For descriptions of the authentication procedure on the second network slice, refer to FIG. 3 and content corresponding to FIG. 3. Details are not described herein again.

The communication method provided in this embodiment of this application is a technical solution for network slice authentication in a network slice replacement scenario. When the first network slice in the network is congested or unavailable, a related network element (for example, the PCF, the NSSF, or the OAM) may send the notification message to the mobility management network element to indicate that the first network slice needs to be switched to the second network slice. Then, before the UE accesses the second network slice, the mobility management network element determines that the second network slice is a network slice to be authenticated, and sends the to-be-authenticated network slice information (including the identifier of the second network slice) to the UE, to trigger performing the authentication procedure on the second network slice. According to the method, network slice authentication can be successfully implemented in a network slice replacement scenario, to avoid a security risk caused by arbitrary access of the UE to the second network slice because the second network slice is not authenticated.

It should be noted that the communication method provided in embodiments of this application is a method for performing network slice authentication in the network slice replacement scenario. The method may be applied to the following two scenarios.

A first scenario is a scenario in which the first network slice currently accessed by the UE is congested or unavailable, and the UE does not have a PDU session associated with the first network slice.

It may be understood that, that the UE does not have the PDU session associated with the first network slice includes the following several cases.

Case 1: When the first network slice currently accessed by the UE is congested or unavailable, the UE has not initiated a PDU session establishment request.

Case 2: When the first network slice currently accessed by the UE is congested or unavailable, the UE initiates a PDU session establishment request, but a PDU session establishment procedure has not been completed.

In scenarios of the foregoing two cases, the communication method provided in embodiments of this application is performed. Before the PDU session is established and after the authentication procedure on the new network slice (the new network slice is referred to as the second network slice in the following embodiments) is completed, the UE accesses the second network slice, and establishes the PDU session associated with the second network slice.

A second scenario is a scenario in which the first network slice currently accessed by the UE is congested or unavailable, and the UE has a PDU session that is based on the first network slice.

In the second scenario, the communication method provided in embodiments of this application is performed to complete the authentication procedure on the second network slice, and after the authentication succeeds, the PDU session is changed, and the PDU session is transferred from the first network slice to the second network slice.

The following uses a 5G communication network architecture as an example to describe in detail the communication methods in the foregoing different scenarios from a perspective of interaction between network elements.

### Embodiment 1

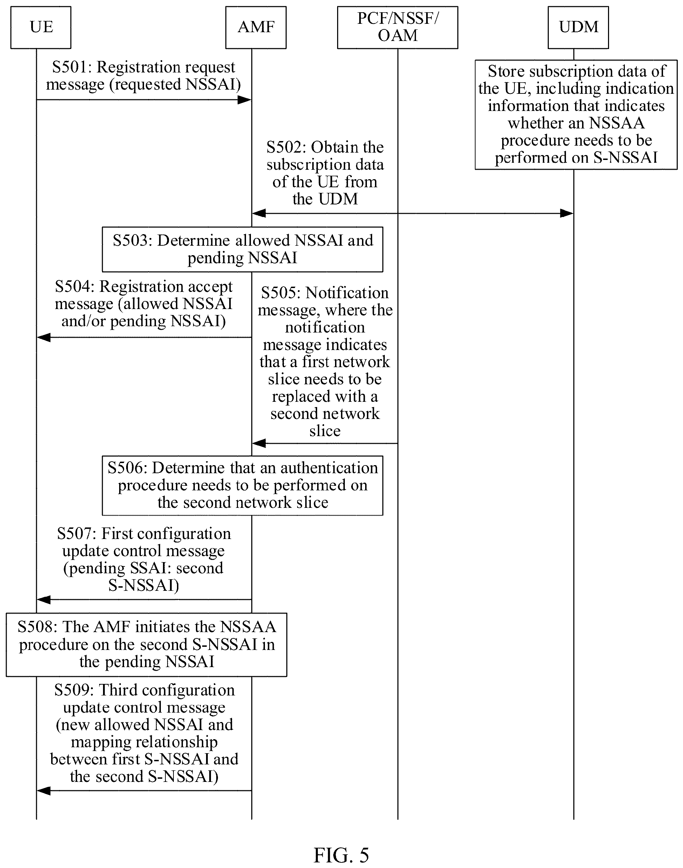

In a scenario in which when a first network slice currently accessed by a UE is congested or unavailable, the first network slice needs to be replaced with a second network slice, and the UE has not initiated a PDU session establishment request, an implementation is as follows: A mobility management network element (for example, an AMF) sends a configuration update control message to the UE by using a UCU procedure, to indicate the UE to perform an authentication procedure (that is, an NSSAA procedure) on the second network slice. Specifically, as shown in FIG. 5, a communication method provided in an embodiment of this application may include the following steps.

S501: The UE sends a registration request message to the AMF. Correspondingly, the AMF receives the registration request message.

The registration request message carries an identifier of a network slice requested by the UE (Requested NSSAI). In the following embodiment, an example in which the identifier of the network slice is S-NSSAI is used for description.

S502: The AMF obtains subscription data of the UE from a UDM.

The subscription data of the UE includes S-NSSAI (of a network slice) to which the UE subscribes and indication information that indicates whether an NSSAA procedure needs to be performed on the S-NSSAI.

S503: The AMF determines, based on the subscription data of the UE, current location information of the UE, and the S-NSSAI of the network slice requested by the UE, an S-NSSAI set on which the NSSAA procedure dos not need to be performed (that is, allowed NSSAI) and an S-NSSAI set on which the NSSAA procedure needs to be performed (that is, pending NSSAI).

S504: The AMF sends a registration accept message to the UE. Correspondingly, the UE receives the registration accept message from the AMF.

The registration accept message includes the allowed NSSAI and/or the pending NSSAI. The authentication procedure does not need to be performed on S-NSSAI in the allowed NSSAI, and the authentication procedure needs to be performed on S-NSSAI in the pending NSSAI.

It may be understood that, for the requested NSSAI in the registration request message in S501, if the authentication procedure needs to be performed on no S-NSSAI in the requested NSSAI, the registration accept message includes the allowed NSSAI; if the authentication procedure needs to be performed on all S-NSSAI in the requested NSSAI, the registration accept message includes the pending NSSAI; or if the authentication procedure does not need to be performed on a part of S-NSSAI in the requested NSSAI, and the authentication procedure needs to be performed on a part of S-NSSAI, the registration accept message includes the allowed NSSAI and the pending NSSAI.

For each piece of S-NSSAI in the pending NSSAI, the AMF initiates the authentication procedure on each piece of S-NSSAI, obtains new allowed NSSAI and/or rejected NSSAI based on an authentication result, and sends the new allowed NSSAI and/or the rejected NSSAI to the UE through the configuration update control message. Then, the UE accesses a network slice (including the first network slice) in the new allowed NSSAI. For details, refer to related descriptions in steps S305 and S306 in the foregoing embodiment. Details are not described herein again.

S505: A PCF/An NSSF/An OAM sends a notification message to the AMF, where the notification message indicates that the first network slice needs to be replaced with the second network slice. Correspondingly, the AMF receives the notification message.

The notification message carries an identifier of the first network slice and an identifier of the second network slice. The first network slice may also be referred to as old S-NSSAI, and the second network slice may also be referred to as alternative S-NSSAI. The identifier of the first network slice is first S-NSSAI, and the identifier of the second network slice is second S-NSSAI.

S506: The AMF determines that the authentication procedure needs to be performed on the second network slice.

In this embodiment of this application, the AMF determines, based on the notification message, that the first network slice needs to be replaced with the second network slice, and the AMF determines, based on a network slice (that is, the allowed NSSAI) that is allowed to be accessed in a context of the UE, a specific UE or specific UEs that currently access the first network slice. One of the UEs that access the first network slice is used as an example, and the AMF determines, based on the subscription data of the UE, whether the authentication procedure needs to be performed on the second network slice.

If it is determined that the authentication procedure does not need to be performed on the second network slice, the AMF may trigger a procedure of accessing the second network slice by the UE. If it is determined that the authentication procedure needs to be performed on the second network slice, the AMF adds the identifier of the second network slice to the pending NSSAI, and performs the following S507.

S507: The AMF sends a first configuration update control message to the UE, where the first configuration update control message carries the pending NSSAI, and the pending NSSAI includes the second S-NSSAI.

S508: The AMF initiates the authentication procedure on the second network slice.

In this embodiment of this application, if a result of performing the authentication procedure on the second network slice is that the authentication succeeds, the AMF adds the second S-NSSAI to the allowed NSSAI to obtain new allowed NSSAI. Then, the AMF performs the following S509, and the AMF performs network slice replacement. It should be noted that the new allowed NSSAI in step S508 is a result of updating the allowed NSSAI in step S504. If the result of performing the authentication procedure on the second network slice is that the authentication fails, the AMF adds the second S-NSSAI to the rejected NSSAI, and the AMF does not perform network slice replacement.

S509: The AMF sends a third configuration update control message to the UE, where the third configuration update control message carries the new allowed NSSAI and a mapping relationship between the first network slice and the second network slice (mapping of the old S-NSSAI to the alternative S-NSSAI).

After S509, the UE may learn, based on the mapping relationship between the first network slice and the second network slice, that the first network slice needs to be replaced with the second network slice, and then the AMF interacts with the UE, so that the UE accesses the second network slice, to implement network slice replacement. In addition, subsequently, the UE initiates the PDU session establishment request to the AMF, where the PDU session establishment request carries the second S-NSSAI, and the second S-NSSAI indicates to establish a PDU session associated with the second network slice, so that the AMF, the SMF, and the UE interact with each other to establish the PDU session associated with the second network slice.

For more detailed descriptions of S501 to S509, refer to related descriptions in the foregoing embodiment. Details are not described herein again.

According to S501 to S509, the mobility management network element may send the configuration update control message to the UE by using the UCU procedure, to indicate the UE to perform the authentication procedure on the second network slice. The second network slice is successfully authenticated in a scenario in which the UE has not initiated the PDU session establishment request, to avoid a security risk caused by arbitrary access of the UE to the second network slice because the second network slice is not authenticated.

### Embodiment 2

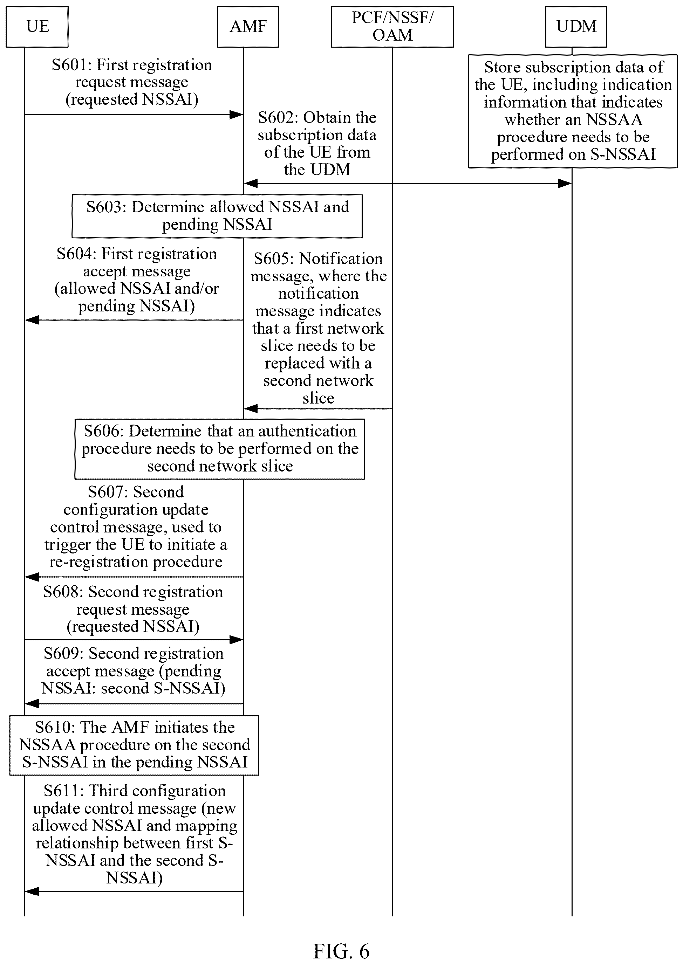

In a scenario in which when a first network slice currently accessed by a UE is congested or unavailable, the first network slice needs to be replaced with a second network slice, and the UE has not initiated a PDU session establishment request, another implementation is as follows: A mobility management network element (for example, an AMF) sends a configuration update control message to the UE by using a UCU procedure, to trigger the UE to initiate a re-registration procedure, and then the AMF initiates an authentication procedure on the second network slice. Specifically, as shown in FIG. 6, a communication method provided in an embodiment of this application may include the following steps.

S601: The UE sends a first registration request message to the AMF. Correspondingly, the AMF receives the first registration request message.

The first registration request message carries S-NSSAI of a network slice requested by the UE (Requested NSSAI).

S602: The AMF obtains subscription data of the UE from a UDM.

The subscription data of the UE includes S-NSSAI (of a network slice) to which the UE subscribes and indication information that indicates whether an NSSAA procedure needs to be performed on the S-NSSAI.

S603: The AMF determines, based on the subscription data of the UE, current location information of the UE, and the S-NSSAI of the network slice requested by the UE, an S-NSSAI set on which the NSSAA procedure dos not need to be performed (that is, allowed NSSAI) and an S-NSSAI set on which the NSSAA procedure needs to be performed (that is, pending NSSAI).

S604: The AMF sends a first registration accept message to the UE. Correspondingly, the UE receives the first registration accept message from the AMF.

The first registration accept message includes the allowed NSSAI and/or the pending NSSAI. The authentication procedure does not need to be performed on S-NSSAI in the allowed NSSAI, and the authentication procedure needs to be performed on S-NSSAI in the pending NSSAI.

Similar to Embodiment 1, for each piece of S-NSSAI in the pending NSSAI, the AMF initiates the authentication procedure on each piece of S-NSSAI, obtains new allowed NSSAI and/or rejected NSSAI based on an authentication result, and sends the new allowed NSSAI and/or the rejected NSSAI to the UE through the configuration update control message. Subsequently, the UE accesses a network slice (including the first network slice) in the new allowed NSSAI.

S605: A PCF/An NSSF/An OAM sends a notification message to the AMF, where the notification message indicates that the first network slice needs to be replaced with the second network slice. Correspondingly, the AMF receives the notification message.

The notification message carries an identifier of a first network slice (old S-NSSAI) and an identifier of the second network slice (alternative S-NSSAI), the identifier of the first network slice is first S-NSSAI, and the identifier of the second network slice is second S-NSSAI.

S606: The AMF determines that the authentication procedure needs to be performed on the second network slice.

If it is determined that the authentication procedure does not need to be performed on the second network slice, the AMF may trigger a procedure of accessing the second network slice by the UE. If it is determined that the authentication procedure needs to be performed on the second network slice, the AMF adds the identifier of the second network slice to the pending NSSAI, and performs the following S607.

S607: The AMF sends a second configuration update control message to the UE, where the second configuration update control message is used to trigger the UE to initiate a re-registration procedure. Correspondingly, the UE receives the second configuration update control message from the AMF.

S608: The UE sends a second registration request message to the AMF. Correspondingly, the AMF receives the second registration request message from the UE.

It should be noted that requested NSSAI carried in the second registration request message may be the same as or different from the requested NSSAI carried in the first registration request message.

S609: The AMF sends a second registration accept message to the UE. Correspondingly, the UE receives the second registration accept message from the AMF.

Specifically, the AMF determines, based on the subscription data of the UE, the current location information of the UE, and the identifier of the network slice requested by the UE, an S-NSSAI set on which an authentication procedure dos not need to be performed (that is, the allowed NSSAI) and an S-NSSAI set on which the authentication procedure needs to be performed (that is, the pending NSSAI).

The second registration accept message includes the pending NSSAI, the authentication procedure needs to be performed on S-NSSAI in the pending NSSAI, and the pending NSSAI includes the second S-NSSAI. Optionally, the second registration accept message may further include the allowed NSSAI, and the authentication procedure does not need to be performed on the S-NSSAI in the allowed NSSAI.

S610: The AMF initiates the authentication procedure on the second network slice, that is, the AMF initiates the NSSAA procedure on the second S-NSSAI in the pending NSSAI.

In this embodiment of this application, if a result of performing the authentication procedure on the second network slice is that the authentication succeeds, the AMF adds the second S-NSSAI to the allowed NSSAI to obtain new allowed NSSAI. Then, the AMF performs the following S611, and the AMF performs network slice replacement. It should be noted that the new allowed NSSAI in step S610 is a result of updating the allowed NSSAI in step S609. If the result of performing the authentication procedure on the second network slice is that the authentication fails, the AMF adds the second S-NSSAI to the rejected NSSAI, and the AMF does not perform network slice replacement.

S611: The AMF sends a third configuration update control message to the UE, where the third configuration update control message carries the new allowed NSSAI and a mapping relationship between the first network slice and the second network slice.

Similar to the embodiment corresponding to FIG. 5, after S611, the AMF interacts with the UE, so that the UE accesses the second network slice. Subsequently, the UE initiates the PDU session establishment request to the AMF, where the PDU session establishment request carries the second S-NSSAI, and the second S-NSSAI indicates to establish a PDU session associated with the second network slice, so that the AMF, the SMF, and the UE interact with each other to establish the PDU session associated with the second network slice.

According to S601 to S611, the mobility management network element may send the configuration update control message to the UE by using the UCU procedure, to trigger the UE to initiate a re-registration procedure, and then the AMF initiates the authentication procedure on the second network slice. In this way, the second network slice may be successfully authenticated in a scenario in which the UE has not initiated the PDU session establishment request, to avoid a security risk caused by arbitrary access of the UE to the second network slice because the second network slice is not authenticated.

### Embodiment 3

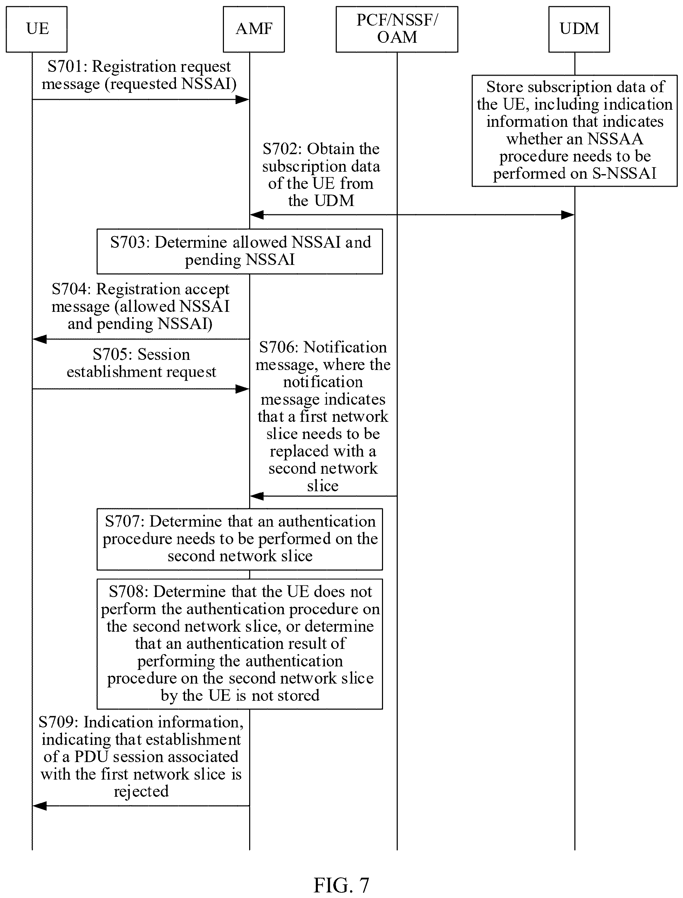

In a scenario in which when a first network slice currently accessed by a UE is congested or unavailable, the UE has initiated a session establishment request for establishing a PDU session associated with the first network slice, but a procedure of establishing the PDU session has not been completed, an implementation is as follows: An AMF does not perform network slice replacement, and the AMF rejects to establish the PDU session associated with the first network slice. Specifically, as shown in FIG. 7, a communication method provided in an embodiment of this application may include the following steps.

S701: The UE sends a registration request message to the AMF. Correspondingly, the AMF receives the registration request message.

The registration request message carries S-NSSAI of a network slice requested by the UE (Requested NSSAI).

S702: The AMF obtains subscription data of the UE from a UDM.

The subscription data of the UE includes S-NSSAI (of a network slice) to which the UE subscribes and indication information that indicates whether an NSSAA procedure needs to be performed on the S-NSSAI.

S703: The AMF determines, based on the subscription data of the UE, current location information of the UE, and the S-NSSAI of the network slice requested by the UE, an S-NSSAI set on which the NSSAA procedure dos not need to be performed (that is, allowed NSSAI) and an S-NSSAI set on which the NSSAA procedure needs to be performed (that is, pending NSSAI).

S704: The AMF sends a registration accept message to the UE. Correspondingly, the UE receives the registration accept message from the AMF.

The registration accept message includes the allowed NSSAI and/or the pending NSSAI. An authentication procedure does not need to be performed on S-NSSAI in the allowed NSSAI, and an authentication procedure needs to be performed on S-NSSAI in the pending NSSAI.

Similar to Embodiment 1, for each piece of S-NSSAI in the pending NSSAI, the AMF initiates the authentication procedure on each piece of S-NSSAI, obtains new allowed NSSAI and/or rejected NSSAI based on an authentication result, and then sends the new allowed NSSAI and/or rejected NSSAI to the UE by using a configuration update control message, and the UE accesses a network slice (including the first network slice) in the new allowed NSSAI.

S705: The UE sends the session establishment request to the AMF. Correspondingly, the AMF receives the session establishment request from the UE.

The session establishment request is used to trigger establishment of the PDU session associated with the first network slice. It should be understood that the session establishment request carries first S-NSSAI, to initiate the procedure of establishing the PDU session associated with the first network slice.

S706: A PCF/An NSSF/An OAM sends a notification message to the AMF, where the notification message indicates that the first network slice needs to be replaced with a second network slice. Correspondingly, the AMF receives the notification message.

It should be noted that after the AMF receives the session establishment request sent by the UE, the PCF/NSSF/OAM detects that the first network slice in a network is congested or unavailable, and sends the notification message to the AMF. The notification message carries an identifier of the first network slice (old S-NSSAI) and an identifier of the second network slice (alternative S-NSSAI), the identifier of the first network slice is the first S-NSSAI, and the identifier of the second network slice is second S-NSSAI.

S707: The AMF determines that the authentication procedure needs to be performed on the second network slice.

If it is determined that the authentication procedure does not need to be performed on the second network slice, the AMF may trigger a procedure of accessing the second network slice by the UE. If it is determined that the authentication procedure needs to be performed on the second network slice, the AMF performs the following S708.

S708: The AMF determines that the UE has not performed the authentication procedure on the second network slice, or the AMF determines that an authentication result of performing the authentication procedure on the second network slice by the UE is not stored.

S709: The AMF sends indication information to the UE, where the indication information indicates that the establishment of the PDU session associated with the first network slice is rejected.

According to S701 to S709, when determining that the second network slice needs to be replaced with the first network slice, a mobility management network element needs to consider whether to authenticate the second network slice. When the second network slice needs to be authenticated, the AMF rejects to establish the PDU session associated with the first network slice, to avoid a security risk caused by arbitrary access of the UE to the second network slice because the second network slice is not authenticated.

### Embodiment 4

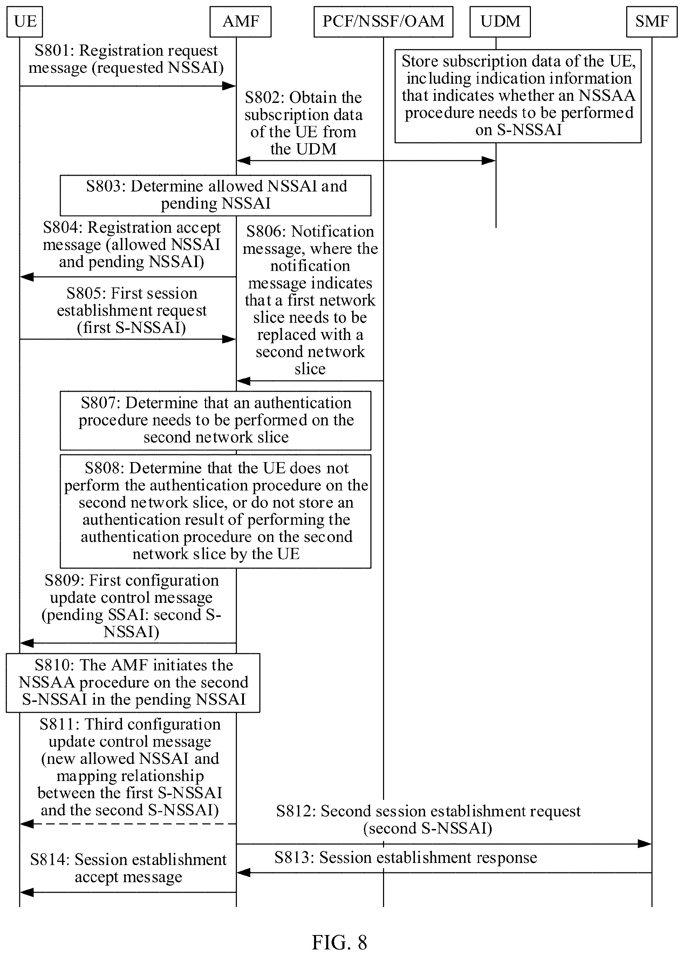

In a scenario in which when a first network slice currently accessed by a UE is congested or unavailable, the first network slice needs to be replaced with a second network slice, the UE has initiated a session establishment request for establishing a PDU session associated with the first network slice, but a procedure of establishing the PDU session has not been completed, another implementation is as follows: An AMF suspends the session establishment procedure, and sends a configuration update control message to the UE by using a UCU procedure, to indicate the UE to perform an authentication procedure (that is, an NSSAA procedure) on the second network slice. Specifically, as shown in FIG. 8, a communication method provided in an embodiment of this application may include the following steps.

S801: The UE sends a registration request message to the AMF. Correspondingly, the AMF receives the registration request message.

The registration request message carries S-NSSAI of a network slice requested by the UE (Requested NSSAI).

S802: The AMF obtains subscription data of the UE from a UDM.

The subscription data of the UE includes S-NSSAI (of a network slice) to which the UE subscribes and indication information that indicates whether the NSSAA procedure needs to be performed on the S-NSSAI.

S803: The AMF determines, based on the subscription data of the UE, current location information of the UE, and the S-NSSAI of the network slice requested by the UE, an S-NSSAI set on which the NSSAA procedure dos not need to be performed (that is, allowed NSSAI) and an S-NSSAI set on which the NSSAA procedure needs to be performed (that is, pending NSSAI).

S804: The AMF sends a registration accept message to the UE. Correspondingly, the UE receives the registration accept message from the AMF.

The registration accept message includes the allowed NSSAI and/or the pending NSSAI. An authentication procedure does not need to be performed on S-NSSAI in the allowed NSSAI, and an authentication procedure needs to be performed on S-NSSAI in the pending NSSAI.

Similarly, for each piece of S-NSSAI in the pending NSSAI, the AMF initiates the authentication procedure on each piece of S-NSSAI, obtains new allowed NSSAI and/or rejected NSSAI based on an authentication result, and then sends the new allowed NSSAI and/or rejected NSSAI to the UE by using the configuration update control message, and the UE accesses a network slice (including the first network slice) in the new allowed NSSAI.

S805: The UE sends a first session establishment request to the AMF. Correspondingly, the AMF receives the first session establishment request from the UE.

The first session establishment request is used to trigger establishment of the PDU session associated with the first network slice. It may be understood that the first session establishment request carries an identifier of the first network slice, that is, first S-NSSAI, to indicate to establish the PDU session associated with the first network slice.

S806: A PCF/An NSSF/An OAM sends a notification message to the AMF, where the notification message indicates that the first network slice needs to be replaced with the second network slice. Correspondingly, the AMF receives the notification message.

It should be noted that after the AMF receives the session establishment request sent by the UE, the PCF/NSSF/OAM detects that the first network slice in a network is congested or unavailable, and sends the notification message to the AMF.

S807: The AMF determines that the authentication procedure needs to be performed on the second network slice.

If it is determined that the authentication procedure does not need to be performed on the second network slice, the AMF may trigger a procedure of accessing the second network slice by the UE. If it is determined that the authentication procedure needs to be performed on the second network slice, the AMF performs the following S808.

S808: The AMF determines that the UE does not perform the authentication procedure on the second network slice, or the AMF does not store an authentication result of performing the authentication procedure on the second network slice by the UE.

In this embodiment of this application, when the AMF determines that the authentication procedure needs to be performed on the second network slice, the AMF needs to first determine whether the UE performs the authentication procedure on the second network slice, or determine whether the AMF stores the authentication result of performing the authentication procedure on the second network slice by the UE.

In an implementation, if the UE does not perform the authentication procedure on the second network slice or the AMF does not store the authentication result of performing the authentication procedure on the second network slice by the UE, the AMF suspends the PDU session establishment procedure, and adds second S-NSSAI to the pending NSSAI. Then the AMF performs the following S809 to S811 to first complete the authentication procedure on the second network slice, and performs a session modification procedure in S812 to S814 after the UE accesses the second network slice, to transfer the PDU session from the first network slice to the second network slice.

In another implementation, if the AMF stores the authentication result of performing the authentication procedure on the second network slice by the UE, and the authentication result is a success there are two cases in this implementation.

In a first case, the AMF stores the authentication result that indicates that the authentication on the second network slice succeeds, and local allowed NSSAI of the UE includes an identifier of the second network slice. In other words, the UE currently already accesses the second network slice. In this case, the AMF directly performs the following session modification procedure in S812 to S814, to transfer the PDU session from the first network slice to the second network slice.

In a second case, the AMF stores the authentication result that indicates that the authentication on the second network slice succeeds, but local allowed NSSAI of the UE does not include an identifier of the second network slice. In other words, the UE currently does not access the second network slice. In this case, the AMF performs the following S811, sends, by using the configuration update control message, new allowed NSSAI including the second network slice to the UE, and then performs the session modification procedure in S812 to S814 after the UE accesses the second network slice, to transfer the PDU session from the first network slice to the second network slice.

In the second case, one possible reason why the AMF stores the authentication result that indicates that the authentication on the second network slice succeeds, but the local allowed NSSAI of the UE does not include the identifier of the second network slice is that the UE performs the authentication procedure on the second network slice before the first network slice accessed by the UE is congested or unavailable. Therefore, the AMF locally stores the authentication result that indicates that the authentication on the second network slice succeeds, the allowed NSSAI of the UE includes the identifier of the second network slice, and the UE also accesses the second network slice. Then, the UE accesses the first network slice, and does not access the second network slice anymore. In this case, the identifier of the second network slice in the allowed NSSAI of the UE is removed from the allowed NSSAI. Therefore, the local allowed NSSAI of the UE does not include the identifier of the second network slice.

S809: The AMF sends a first configuration update control message to the UE, where the first configuration update control message carries the pending NSSAI, and the pending NSSAI includes the second S-NSSAI.

S810: The AMF initiates the authentication procedure on the second network slice.

It should be understood that when the authentication on the second network slice succeeds, the AMF adds the second S-NSSAI to the allowed NSSAI to obtain new allowed NSSAI, and then the AMF performs S811. When the authentication on the second network slice fails, the AMF rejects the establishing of the PDU session. Similar to S709, the AMF sends an indication message to the UE, to indicate that the establishment of the PDU session associated with the first network slice is rejected.

S811: The AMF sends a third configuration update control message to the UE, where the third configuration update control message carries the new allowed NSSAI and a mapping relationship between the first network slice and the second network slice, and the new allowed NSSAI includes the identifier of the second network slice.

S812: The AMF sends a second session establishment request to the SMF, where the second session establishment request is used to trigger establishment of a PDU session associated with the second network slice, and the session establishment request carries the identifier of the second network slice, that is, the second S-NSSAI.

In this embodiment of this application, the AMF selects an SMF based on the second network slice, and sends the session establishment request to the SMF, to trigger the SMF to establish the PDU session associated with the second network slice.

S813: The SMF returns a session establishment response to the AMF.

S814: The AMF sends a session establishment accept message to the UE.

In this embodiment of this application, in a process in which the UE requests to establish the PDU session associated with the first network slice, when the AMF determines that the first network slice needs to be switched to the second network slice, the AMF initiates the authentication procedure on the second network slice. After the authentication succeeds, the PDU session associated with the second network slice is established by using S812 to S814. For a detailed process of the PDU session establishment procedure, refer to descriptions in existing technical documentations. Details are not described in this embodiment of this application.

According to S801 to S814, when determining that the second network slice needs to be replaced with the first network slice, the mobility management network element needs to consider whether to authenticate the second network slice. When the second network slice needs to be authenticated, the AMF initiates the authentication procedure on the second network slice, and after the authentication succeeds, changes the establishment that is of the PDU session associated with the first network slice and that is previously initiated by the UE to the establishment of the PDU session associated with the second network slice, to avoid a security risk caused by arbitrary access of the UE to the second network slice because the second network slice is not authenticated, and successfully establish the PDU session for the UE.

### Embodiment 5

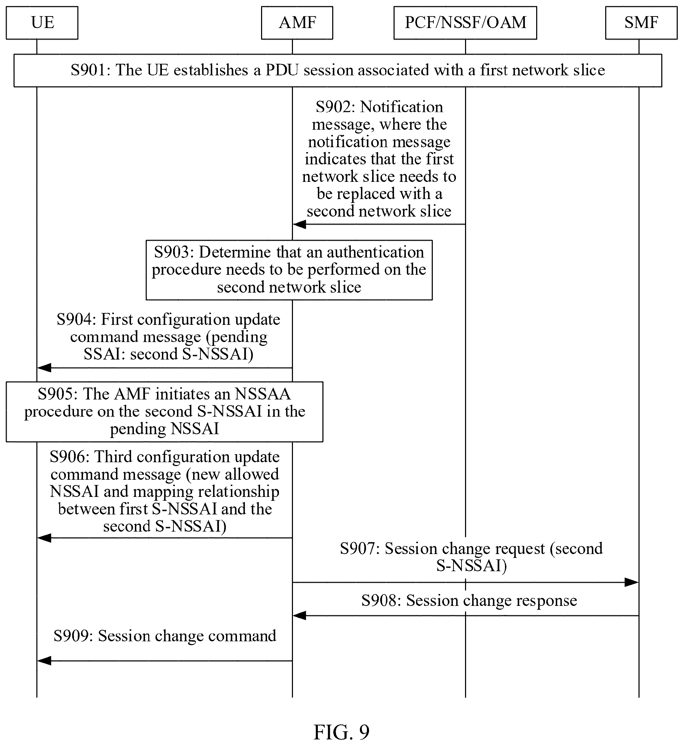

In a scenario in which when a first network slice currently accessed by a UE is congested or unavailable, a second network slice needs to be replaced with the second network slice, and the UE has a PDU session associated with the first network slice, a mobility management network element (for example, an AMF) sends a configuration update control message to the UE by using a UCU procedure, to indicate the UE to perform an authentication procedure (that is, an NSSAA procedure) on the second network slice. Specifically, as shown in FIG. 9, a communication method provided in an embodiment of this application may include the following steps.

S901: The UE establishes the PDU session associated with the first network slice, that is, the UE has established the PDU session associated with the first network slice.

S902: A PCF/An NSSF/An OAM sends a notification message to the UE, where the notification message indicates that the first network slice needs to be replaced with the second network slice. Correspondingly, the AMF receives the notification message.

The notification message carries second S-NSSAI.

S903: The AMF determines that the authentication procedure needs to be performed on the second network slice.

In this embodiment of this application, the AMF determines whether the authentication procedure needs to be performed on the second network slice. If the AMF determines that the authentication procedure does not need to be performed on the second network slice, after the UE accesses the second network slice, the AMF performs S907 to S909 to complete a session modification procedure. If the AMF determines that the authentication procedure needs to be performed on the second network slice, the AMF first performs S904 to S906 to complete the authentication procedure on the second network slice, and after the UE accesses the second network slice, the AMF performs S907 to S909 to complete the session modification procedure.

S904: The AMF sends a first configuration update control message to the UE, where the first configuration update control message carries pending NSSAI, and the pending NSSAI includes the second S-NSSAI.

S905: The AMF initiates the authentication procedure on the second network slice.

In this embodiment of this application, if a result of performing the authentication procedure on the second network slice is that the authentication succeeds, the AMF adds the second S-NSSAI to allowed NSSAI to obtain new allowed NSSAI, and then the AMF performs S906. If a result of performing the authentication procedure on the second network slice is that the authentication fails, the AMF adds S-NSSAI of the second network slice to rejected NSSAI, and the AMF does not perform network slice replacement.

S906: The AMF sends a third configuration update control message to the UE, where the third configuration update control message carries the new allowed NSSAI and a mapping relationship between the first network slice and the second network slice.

In this embodiment of this application, after the AMF receives the third configuration update control message, the AMF initiates the session modification procedure (S907 to S909), to transfer the current PDU session of the UE from the first network slice to the second network slice, and establish a PDU session associated with the second network slice.

S907: The AMF sends a session change request to an SMF. The session change request carries the second S-NSSAI, and the session change request is used to trigger changing the current PDU session associated with the first network slice of the UE into the PDU session associated with the second network slice.

S908: The SMF returns a session change response to the AMF.

S909: The AMF sends a session change command to the UE.

In this embodiment of this application, when the UE has established the PDU session associated with the first network slice, when the first network slice needs to be switched to the second network slice, the AMF initiates the authentication procedure on the second network slice. After the authentication succeeds, the AMF performs PDU session change by using S907 to S909, to transfer the PDU session from the first network slice to the second network slice. For a detailed process of the PDU session modification procedure, refer to descriptions in existing technical documentations. Details are not described in this embodiment of this application.

In the communication method in S901 to S909, the first network slice may be replaced with the second network slice, and the PDU session originally associated with the first network slice may be transferred to the second network slice, so that it can be ensured that service continuity is not affected.

In the foregoing Embodiment 1 to Embodiment 5, some steps are the same or similar. Therefore, descriptions of steps in embodiments may be mutually referenced.

It may be understood that, to implement the foregoing functions, the communication apparatus (that is, the mobility management network element) for performing the communication method includes a corresponding hardware structure and/or software module for performing each function. A person skilled in the art should easily be aware that, in composition with methods and steps of the examples described in embodiments disclosed in this specification, embodiments of this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of embodiments of this application.

In embodiments of this application, the communication apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

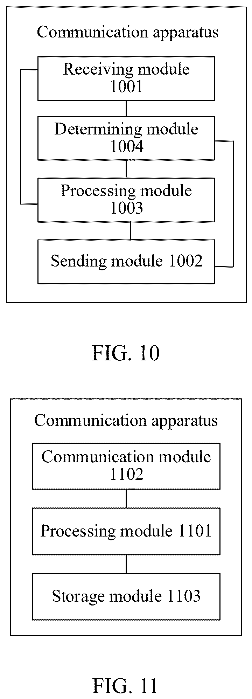

When each functional module is obtained through division based on each corresponding function, FIG. 10 is a possible diagram of a structure of a communication apparatus according to an embodiment of this application. It should be understood that the communication apparatus may implement a function of the mobility management network element in the foregoing embodiments. As shown in FIG. 10, the communication apparatus includes a receiving module 1001 and a sending module 1002.

The receiving module 1001 is configured to perform S401, S501, S502, S505, S601, S602, S605, S608, S701, S702, S705, S706, S801, S802, S805, S806 and S902 in the foregoing method embodiments. The sending module 1002 is configured to perform S402, S504, S507, S509, S603, S604, S607, S609, S611, S704, S709, S804, S809, S811, S812, S814, S904, S906, S907 and S909 in the foregoing method embodiments.

Optionally, the communication apparatus provided in this embodiment of this application further includes a processing module 1003 and a determining module 1004.

The processing module 1003 is configured to perform S508, S610, S810, and S905 in the foregoing method embodiments. The determining module 1004 is configured to perform S503, S506, S606, S703, S707, S708, S803, S807, S808 and S903 in the foregoing method embodiments.

When an integrated unit is used, FIG. 11 is a possible diagram of another structure of the communication apparatus in the foregoing embodiments. The communication apparatus may include a processing module 1101 and a communication module 1102. The processing module 1101 may be configured to control and manage an action of the communication apparatus. For example, the processing module 1101 may be configured to support the communication apparatus in performing S503, S506, S508, S606, S610, S703, S707, S708, S803, S807, S808, S810, S903 and S905 in the foregoing method embodiments, and/or another process of the technology described in this specification. The communication module 1102 may be configured to support communication between the communication apparatus and another network entity, for example, perform S401, S402, S501, S502, S504, S505, S507, S509, S601, S602, S603, S604, S605, S607, S608, S609, S611, S701, S702, S704, S705, S706, S709, S801, S802, S804, S805, S806, S809, S811, S812, S814, S902, S904, S906, S907 and S909 in the foregoing method embodiments. Optionally, as shown in FIG. 11, the communication apparatus may further include a storage module 1103, configured to store program code and data of the communication apparatus.

The processing module 1101 may be a processor, the communication module 1102 may be a transceiver, a transceiver circuit, a communication interface, or the like, and the storage module 1103 may be a memory.

The various modules of the communication apparatus can also be used to perform other actions in the foregoing method embodiments. All related content of the steps in the foregoing method embodiments may be cited in function descriptions of the corresponding functional modules. Details are not described herein again.

For more details of implementing the functions by the modules included in the communication apparatus, refer to descriptions in the foregoing method embodiments. Details are not described herein again. Embodiments in this specification are all described in a progressive manner, for same or similar parts in embodiments, reference may be made to these embodiments, and each embodiment focuses on a difference from other embodiments.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or may be a data storage device, such as a communication apparatus or a data center that integrates one or more usable media. The usable medium may be a magnetic medium (for example, a floppy disk, a magnetic disk, or a magnetic tape), an optical medium (for example, a digital video disc (digital video disc, DVD)), a semiconductor medium (for example, a solid-state drive (solid-state drive, SSD)), or the like.

The foregoing descriptions about implementations allow a person skilled in the art to understand that, for the purpose of convenient and brief description, division of the foregoing functional modules is taken as an example for illustration. During actual application, the foregoing functions can be allocated to different functional modules and implemented based on a requirement, that is, an inner structure of an apparatus is divided into different functional modules to implement all or some of the functions described above. For a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the division into the modules or units is merely logical function division and may be other division during actual implementation. For example, a plurality of units or assemblies may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in a form of software product. The computer software product is stored in a storage medium and includes several instructions for instructing a computer device (which may be a personal computer, a server, a network device, or the like) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, comprising:
receiving, by a mobility management network element, a notification message, wherein the notification message indicates that a first network slice needs to be replaced with a second network slice, and the first network slice is a network slice currently accessed by a user equipment UE; and
before the UE accesses the second network slice, sending, by the mobility management network element, to-be-authenticated network slice information to the UE, wherein the to-be-authenticated network slice information comprises an identifier of the second network slice, and the to-be-authenticated network slice information is used to trigger performing an authentication procedure on the second network slice.

2. The method according to claim 1, wherein the sending, by the mobility management network element, the to-be-authenticated network slice information to the UE comprises:
sending, by the mobility management network element, a first configuration update control message to the UE, wherein the first configuration update control message comprises the to-be-authenticated network slice information.

3. The method according to claim 1, wherein the sending, by the mobility management network element, the to-be-authenticated network slice information to the UE comprises:
sending, by the mobility management network element, a registration accept message to the UE, wherein the registration accept message comprises the to-be-authenticated network slice information.

4. The method according to claim 3, wherein before the sending, by the mobility management network element, the registration accept message to the UE, the method further comprises:
sending, by the mobility management network element, a second configuration update control message to the UE, wherein the second configuration update control message is used to trigger the UE to initiate a registration procedure; and
receiving, by the mobility management network element, a registration request message from the UE.

5. The method according to any one of claims 1 to 4, wherein the method comprises:
initiating, by the mobility management network element, an authentication procedure on the second network slice;
determining, by the mobility management network element, that authentication on the second network slice succeeds; and
sending, by the mobility management network element, a third configuration update control message to the UE, wherein the third configuration update control message comprises information about a network slice allowed to be accessed, and the information about the network slice allowed to be accessed comprises the identifier of the second network slice.

6. The method according to claim 5, wherein
the third configuration update control message further comprises a mapping relationship between the first network slice and the second network slice.

7. The method according to any one of claims 1 to 6, wherein before the receiving, by the mobility management network element, the notification message, the method further comprises:
receiving, by the mobility management network element, a first session establishment request from the UE, wherein the first session establishment request comprises an identifier of the first network slice, and the first session establishment request is used to trigger establishment of a protocol data unit PDU session associated with the first network slice; and
after the authentication on the second network slice succeeds, the method further comprises:
sending, by the mobility management network element, a second session establishment request to a session management network element, wherein the second session establishment request comprises the identifier of the second network slice, and the second session establishment request is used to trigger establishment of a PDU session associated with the second network slice.

8. The method according to any one of claims 1 to 6, wherein the method further comprises:
when the UE has established a protocol data unit PDU session associated with the first network slice, triggering, by the mobility management network element, a session modification procedure for transferring the PDU session from the first network slice to the second network slice.

9. The method according to any one of claims 1 to 8, wherein before the sending, by the mobility management network element, the to-be-authenticated network slice information to the UE, the method further comprises:
determining, by the mobility management network element based on subscription data of the UE, whether the authentication procedure needs to be performed on the second network slice.

10. A communication method, comprising:
receiving, by a mobility management network element, a session establishment request from a user equipment UE, wherein the session request comprises an identifier of a first network slice, and the session establishment request is used to trigger establishment of a PDU session associated with the first network slice;
receiving, by the mobility management network element, a notification message, wherein the notification message indicates that the first network slice needs to be replaced with a second network slice; and
when the mobility management network element determines that an authentication procedure needs to be performed on the second network slice, sending, by the mobility management network element, indication information to the UE, wherein the indication information indicates that the establishment of the PDU session associated with the first network slice is rejected.

11. The method according to claim 10, wherein before sending, by the mobility management network element, the indication information to the UE, the method further comprises:
determining, by the mobility management network element, that the UE has not performed the authentication procedure on the second network slice; or
determining, by the mobility management network element, an authentication result of performing the authentication procedure on the second network slice by the UE is not stored on the mobility management network element.

12. The method according to claim 10 or 11, wherein before sending, by the mobility management network element, the indication information to the UE, the method further comprises:
determining, by the mobility management network element based on subscription data of the UE, whether the authentication procedure needs to be performed on the second network slice.

13. A communication apparatus, comprising a receiving module and a sending module, wherein
the receiving module is configured to receive a notification message, wherein the notification message indicates that a first network slice needs to be replaced with a second network slice, and the first network slice is a network slice currently accessed by user equipment UE; and
the sending module is configured to: before the UE accesses the second network slice, send to-be-authenticated network slice information to the UE, wherein the to-be-authenticated network slice information comprises an identifier of the second network slice, and the to-be-authenticated network slice information is used to trigger performing an authentication procedure on the second network slice.

14. The communication apparatus according to claim 13, wherein
the sending module is specifically configured to send a first configuration update control message to the UE, wherein the first configuration update control message comprises the to-be-authenticated network slice information.

15. The communication apparatus according to claim 13, wherein
the sending module is specifically configured to send a registration accept message to the UE, wherein the registration accept message comprises the to-be-authenticated network slice information.

16. The communication apparatus according to claim 15, wherein
the sending module is further configured to send a second configuration update control message to the UE, wherein the second configuration update control message is used to trigger the UE to initiate a registration procedure; and
the receiving module is further configured to receive a registration request message from the UE.

17. The communication apparatus according to any one of claims 13 to 16, wherein the communication apparatus further comprises a processing module and a determining module, wherein
the processing module is configured to initiate the authentication procedure on the second network slice;
the determining module is configured to determine that authentication on the second network slice succeeds; and
the sending module is further configured to send a third configuration update control message to the UE, wherein the third configuration update control message comprises information about a network slice allowed to be accessed, and the information about the network slice allowed to be accessed comprises the identifier of the second network slice.

18. The communication apparatus according to claim 17, wherein
the third configuration update control message further comprises a mapping relationship between the first network slice and the second network slice.

19. The communication apparatus according to any one of claims 13 to 18, wherein
the receiving module is further configured to receive a first session establishment request from the UE, wherein the first session establishment request comprises an identifier of the first network slice, and the first session establishment request is used to trigger establishment of a protocol data unit PDU session associated with the first network slice; and
the sending module is further configured to: if the PDU session associated with the first network slice is not established, send a second session establishment request to a session management network element, wherein the second session establishment request comprises the identifier of the second network slice, and the second session establishment request is used to trigger establishment of a PDU session associated with the second network slice.

20. The communication apparatus according to any one of claims 13 to 18, wherein
the processing module is further configured to: when the UE has established a protocol data unit PDU session associated with the first network slice, trigger a session modification procedure for transferring the PDU session from the first network slice to the second network slice.

21. The communication apparatus according to any one of claims 13 to 20, wherein
the determining module is further configured to determine, based on subscription data of the UE, whether the authentication procedure needs to be performed on the second network slice.

22. A communication apparatus, comprising a receiving module and a sending module, wherein
the receiving module is configured to receive a session establishment request from a user equipment UE, wherein the session request comprises an identifier of a first network slice, and the session establishment request is used to trigger establishment of a PDU session associated with the first network slice;
the receiving module is further configured to receive a notification message, wherein the notification message indicates that the first network slice needs to be replaced with a second network slice; and
the sending module is configured to: when the mobility management network element determines that an authentication procedure needs to be performed on the second network slice, send indication information to the UE, wherein the indication information indicates that the establishment of the PDU session associated with the first network slice is rejected.

23. The communication apparatus according to claim 22, wherein the communication apparatus further comprises a determining module, wherein
the determining module is configured to determine that the UE has not performed the authentication procedure on the second network slice; or
the determining module is configured to determine that an authentication result of performing the authentication procedure on the second network slice by the UE is not stored.

24. The communication apparatus according to claim 22 or 23, wherein
the determining module is further configured to determine, based on subscription data of the UE, whether the authentication procedure needs to be performed on the second network slice.

25. A communication apparatus, comprising a memory and at least one processor connected to the memory, wherein the memory is configured to store computer program code, the computer program code comprises computer instructions, and when the computer instructions are executed by the at least one processor, the communication apparatus is caused to perform the method according to any one of claims 1 to 9, or perform the method according to any one of claims 10 to 12.

26. A computer-readable storage medium, storing computer instructions, wherein when the computer instructions are run on a computer, the method according to any one of claims 1 to 9 or the method according to any one of claims 10 to 12 is performed.

27. A communication system, comprising a mobility management network element and a user equipment UE, wherein the mobility management network element is configured to perform the method according to any one of claims 1 to 9 or the method according to any one of claims 10 to 12.
